Europäisches Patentamt

European Patent Office

Office européen des brevets

(11) Veröffentlichungsnummer : **0 179 186**
**B1**

(12) **EUROPÄISCHE PATENTSCHRIFT**

(45) Veröffentlichungstag der Patentschrift :
07.06.89

(51) Int. Cl.⁴ : **G 02 B 23/10, F 41 G 3/32, F 41 G 7/26**

(21) Anmeldenummer : 85103225.0

(22) Anmeldetag : 20.03.85

(54) Vorrichtung zur Harmonisierung der Sichtlinien zweier Beobachtungsgeräte.

(30) Priorität : 26.10.84 DE 3439273

(43) Veröffentlichungstag der Anmeldung :
30.04.86 Patentblatt 86/18

(45) Bekanntmachung des Hinweises auf die Patenterteilung : 07.06.89 Patentblatt 89/23

(84) Benannte Vertragsstaaten :
BE DE FR GB IT NL

(56) Entgegenhaltungen :
DE–B– 2 625 081
DE–B– 2 848 003
FR–A– 2 506 922

(73) Patentinhaber : ELTRO GmbH Gesellschaft für Strahlungstechnik
Kurpfalzring 106 Postfach 10 21 20
D-6900 Heidelberg 1 (DE)

(72) Erfinder : Arnold, Michael, Dr.
Leipziger Strasse 58
D-6904 Eppelheim (DE)
Erfinder : Wiest, Herbert
Siedlerstrasse 1
D-6921 Neidenstein (DE)
Erfinder : Stengel, Gerhard
Danziger Strasse 4
D-6900 Heidelberg (DE)
Erfinder : Maier, Jürgen
Rubinweg 3
D-6906 Leimen-Gauangelloch (DE)
Erfinder : Lenz, Hans-Joachim
Kirchheimer Strasse 36
D-6904 Eppelheim (DE)
Erfinder : Köhler, Ludwig
Rockenauer Pfad 4
D-6909 Walldorf (DE)

(74) Vertreter : Muschka, Wilhelm, Dipl.-Ing.
Eltro GmbH Gesellschaft für Strahlungstechnik Kurpfalzring 106 Postfach 10 21 20
D-6900 Heidelberg 1 (DE)

EP 0 179 186 B1

Jouve, 18, rue St-Denis, 75001 Paris, France

## Beschreibung

Die Erfindung bezieht sich auf eine Vorrichtung zur automatischen Harmonisierung der Sichtlinien zweier Beobachtungsgeräte nach dem Oberbegriff des Anspruchs 1.

Eine solche Vorrichtung ist aus der DE-PS 26 25 081 bekannt. Bedarfsweise strahlt ihr Projektor einen Prüfpunkt ab, der von den Drehkeilen unter Ausnutzung der Ablagesignale des Goniometers sowohl im Goniometerwellenlängenbereich als auch im Wellenlängenbereich des Nachtsicht-Zielgerätes verschoben werden kann. Über einen Spektralteiler, der die Projektorstrahlung im Wärmebildbereich reflektiert, wird der Prüfpunkt über eine Kameraelektronik auf einem Elektrookular angezeigt. Er stellt den Durchstoßpunkt der Goniometerachse in der Wärmebildebene dar. Das Leuchtschirmbild des Elektrookulars wird durch die Drehkeile in die gleiche Richtung verschoben wie die Prüfmarke und kann über den Tagkanal im Okular beobachtet werden. Im Goniometerwellenlängenbereich hingegen läßt der Spektralteiler die Projektorstrahlung passieren. Wenn die Ablagespannung durch den Verschiebevorgang zu Null wird, d. h. keine Ablagesignale mehr auftreten, liegt der Prüfpunkt in der Goniometerachse. Ein Lasersender ist bei dieser Ausführungsform nicht vorgesehen.

Der Erfindung liegt die Aufgabe zugrunde, die gattungsgemäße Vorrichtung dergestalt abzuändern, daß die von der Strahlungsquelle emittierte Strahlung sowohl als Leitstrahl für Flugkörper als auch zur Harmonisierung der Sichtlinien der einzelnen Geräteeinheiten verwendet werden kann. Diese Aufgabe wird erfindungsgemäß durch die im Kennzeichen des Anspruchs 1 genannten Merkmale gelöst.

Eine Weiterbildung der Erfindung gemäß Anspruch 2 macht es möglich, die Leitstrahlachse mittels der Drehkeile auch unabhängig von der Achsharmonisierung zu verstellen. Dies ist insofern von Vorteil, weil sich auf diese Weise die Übertragung eines Vorhaltewinkels realisieren läßt.

Auch die restlichen Unteransprüche enthalten Weiterbildungen der Erfindung.

Im folgenden wird an Hand einer Zeichnung ein Ausführungsbeispiel der Erfindung näher erläutert, wobei die in den beiden Figuren einander entsprechenden Teile dieselben Bezugszeichen aufweisen. Es zeigt

Fig. 1 eine Prinzipskizze mit getrennten Elektroniken für das Tag- und das Nachtsicht-Zielgerät sowie mit Umlenkspiegeln und Prismen für die Gewinnung und Auswertung des Referenzstrahles und

Fig. 2 eine Prinzipskizze mit insgesamt nur einer Auswerteelektronik und einem weitgehenden Ersatz der Spiegel und Prismen durch Tripelstreifen.

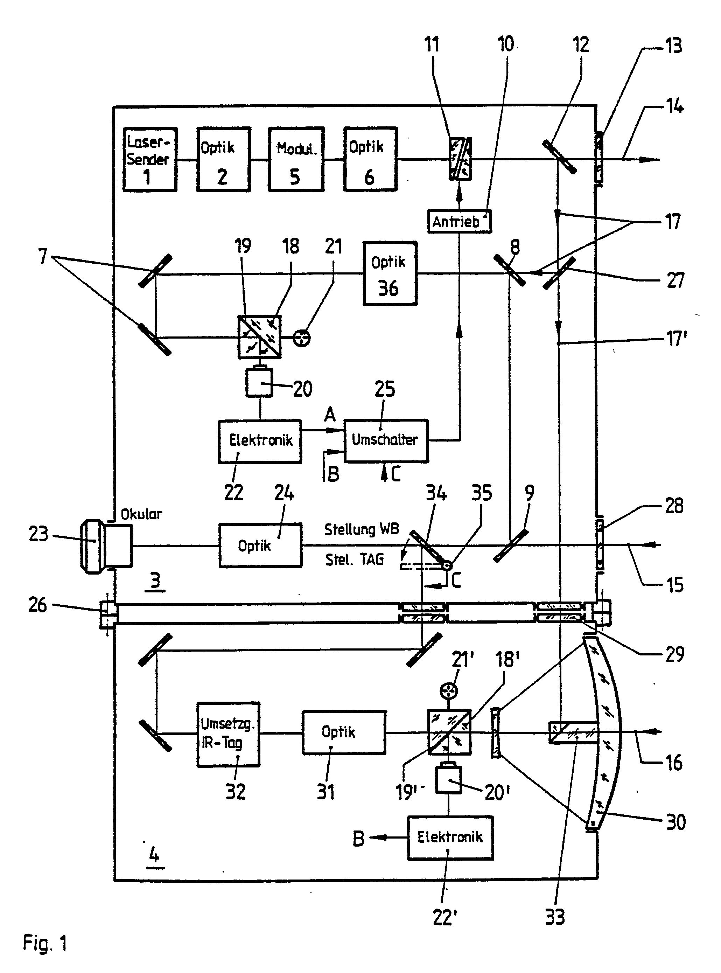

In dem Tagsicht-Zielgerät 3 der Fig. 1 ist ein Lasersender 1, z. B. der Wellenlänge 10,6 µm oder 0,9 µm integriert. Die von diesem Sender emittierte Strahlung gelangt entlang der optischen Achse 14 über die Optik 2, den Frequenzmodulator 5, die Projektionsoptik 6, die über die Motoren 10 antreibbaren Drehkeile 11, den dichroitischen Umlenkspiegel 12 und das Abschlußfenster 13 ins Freie, um als Leitstrahl der Lenkung von Flugkörpern zu dienen. Der Schütze braucht hierbei nur das als Visier ausgebildete Fernrohr 23, 24 mit dem Ziel zur Deckung zu bringen. Bei Nacht oder Schlechtwettereinsatz wird das Tagsicht-Zielgerät 3 mit einem nach dem Prinzip der Wärmebildtechnik arbeitenden Nachtsicht-Zielgerät 4 kombiniert. Die entlang der optischen Achse 16 über das Eintrittsobjektiv 30 einfallende und durch die Spektralteilerschicht 19' des Strahlteilers 18' hindurchtretende IR-Strahlung gelangt über die weitere Optik 31 auf den IR-Detektor 32. Derselbe wandelt die Strahlung optoelektronisch um und macht sie in Form von Spannungssignalen auf einer nicht dargestellten Anzeige sichtbar. Insoweit handelt es sich — von der Verwendung des frequenzmodulierten Laserstrahls abgesehen — um bekannten Stand der Technik.

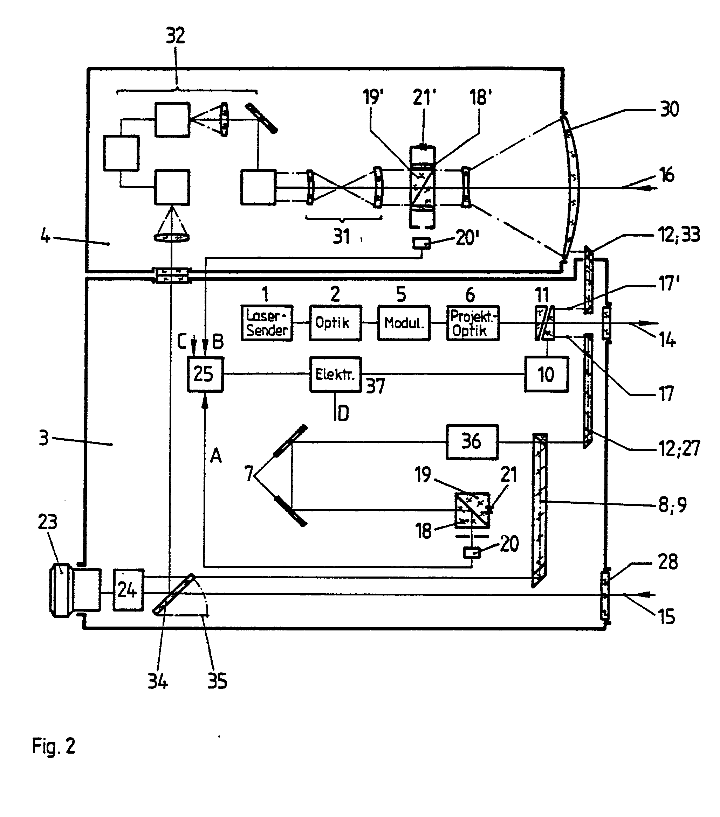

Neben dem Einsatz des Lasers als Leitstrahl macht sich die Erfindung seine Verwendung auch für die Harmonisierung der Sichtlinien 14 bis 16 von Tagsicht-Zielgerät 3 und Nachtsicht-Zielgerät 4 zunutze. Hierbei wird die in der Frequenzmodulation des von 14 abgezweigten Referenzstrahls 17, 17' enthaltene Information benutzt, um eine eventuelle Ablage der optischen Achse 14 des Laserstrahls von den durch die Zielmarken 21 bzw. 21' vorgegebenen optischen Achsen 15 bzw. 16 des Tag- bzw. Wärmebildkanals mit Hilfe der Detektoren 20 bzw. 20' festzustellen und über die nachgeschalteten Einrichtungen 22 und 22' bzw. 37 (Fig. 2) sowie 25, 10 und 11 zu korrigieren.

Der im Bereich zwischen den Drehkeilen 11 und dem Abschlußfenster 13 mit Hilfe des optischen Gliedes 12, 27 abgezweigte Referenzstrahl 17 wird über die (der Harmonisierungsfrequenz und der Fadenkreuzeinspiegelung gemeinsame) Optik 36 und die Umlenkspiegel 7 auf den eine Spektralteilerschicht 19 aufweisenden Strahlteiler 18 gelenkt. In Fig. 1 besteht das optische Glied 12, 27 aus zwei dichroitischen Umlenkspiegeln 12 und 27. Die Spektralteilerschicht reflektiert den Referenzstrahl — z. B. im Winkel 90° zur Einfallsrichtung — auf den Detektor 20. An der der Einfallsrichtung des Referenzstrahls 17 gegenüberliegenden Seite von Prisma 18 ist die Zielmarke 21 befestigt, die in zeichnerisch nicht dargestellter Weise von einem Projektor durch die für seine Strahlung transparente Spektralteilerschicht 19 über die Umlenkspiegel 7 und ein weiteres optisches Glied 8, 9 in den Tagkanal eingespiegelt wird. Das letztgenannte optische Glied wird in Fig. 1 von den beiden Umlenkspiegeln 8 und 9 gebildet. Dem Detektor 20 ist die Elektronik 22 nachgeschaltet, die über Anschluß A des Umschalters 25 den Antrieb 10 der Drehkeile 11 steuert.

Ist das Nachtsicht-Zielgerät 4, z. B. über eine Schwalbenschwanzführung 26, an dem Tagsicht-Zielgerät 3 befestigt und in dessen Funktion einbezogen, so muß der Teil 17' des Referenzstrahles 17 über den dichroitischen Spiegel 27 ausgekoppelt und über den Durchlaß 29 sowie das Strahlteilerprisma 33, entlang der Sichtlinie 16, der in sich starren Einrichtung 18' bis 22' zugeleitet werden. Das Strahlteilerprisma ist hierbei z. B. durch Aufkitten an der Innenseite des IR-Eintrittsobjektivs 30 befestigt. Die Einrichtung 18' bis 22' besteht aus dem Strahlteiler 18' mit der Spektralteilerschicht 19', dem zur optischen Achse 16 unter 90° angeordneten Detektor 20' einschließlich der hier nicht dargestellten Abbildungsoptik, der dem Detektor nachgeschalteten Elektronik 22' sowie der heizbaren IR-Zielmarke 21' mit nicht dargestellter Kollimatorlinse an der dem Detektor gegenüberliegenden Seite des Strahlteilers. Dem Detektor ist die Elektronik 22' nachgeschaltet, die über Anschluß B des Umschalters 25 ihrerseits den Antrieb 10 der Drehkeile 11 zu steuern vermag.

Im optischen Strahlengang zwischen dem Okular 23 und dem Abschlußfenster 28 befindet sich die in Stellung « Wärmebild » dargestellte Tag/Wärmebildumschaltung 34. In der ausgezogen dargestellten Position wird — gegebenenfalls über verschiedene Umlenkglieder — die Wärmebildinformation in den Tagkanal eingespiegelt. Die Tag/Wärmebildumschaltung 34 steuert mit Ihrem Signal C den Umschalter 25, so daß die Steuerung der Drehkeile 11 über Signal B erfolgt. Die Vorrichtung ist somit für den Nacht- oder Schlechtwettereinsatz betriebsbereit, da sich jetzt die Sichtlinien 14 bis 16 über die Drehkeile 11 und die Einrichtung 18' bis 22' harmonisieren, d. h. zueinander parallel ausrichten lassen. Wird die Tag/Wärmebildumschaltung 34 dagegen um 35 in die gestrichelt dargestellte Position « Tag » geschwenkt, ist die optische Verbindung zwischen Okular 23 und Wärmebildgerät unterbrochen, so daß die Drehkeile jetzt nur für den Tagbetrieb über die Einrichtung 18 bis 22 betätigt werden können. Unabhängig von tageszeitlich oder witterungsbedingtem Einsatz läßt sich mit Hilfe der Drehkeile die optische Achse 14 des Lasersenders 1 und Frequenzmodulators 5 gegenüber derjenigen des Visiers 23, 24 auch eigenständig, und zwar zum Zweck der Bildung eines Vorhaltewinkels, verstellen.

Eine Konzentration der vom Lasersender 1 abgestrahlten Leistung auf einem vorgegebenen und mit der Entfernung sich ändernden räumlichen Querschnitt, ohne daß die optische Achse 14 vom Frequenzmodulator 5 beeinflußt wird, läßt sich über eine variable Aufweiteoptik, ein sogenanntes Zoom, erzielen. Für diesen Fall ist die Optik 2 mit einer variablen Brennweite versehen, so daß sich die auf dem Frequenzmodulator ausgeleuchtete Fläche verändern läßt.

Von diesem Ausführungsbeispiel unterscheidet sich dasjenige von Fig. 2 im wesentlichen lediglich dadurch, daß die optischen Glieder 8, 9 und 12, 27 und 12, 33 jeweils in Form eines Tripelstreifens ausgebildet sind und der Referenzstrahlanteil 17' über den Tripelstreifen 12, 33 von außen her durch das Eintrittsobjektiv 30 in die Sichtlinie 16 des Nachtsicht-Zielgerätes 4 eingespiegelt wird. Darüberhinaus sind die Elektronikbausteine 22 und 22' für das Tagsicht-Zielgerät 3 bzw. das Nachsicht-Zielgerät 4 durch nur eine einzige, im Tagsicht-Zielgerät vorgesehene Elektronik 37 mit Mikroprozessor ersetzt, die den Antrieb 10 ansteuert. Über das Signal D wird der Befehl zur Einstellung eines Vorhaltewinkels in die Elektronik 37 eingegeben und dort dem Achsharmonisierungssignal überlagert.

Bei einem anderen, zeichnerisch nicht dargestellten Ausführungsbeispiel kann bei der Einrichtung 21' die IR-Strahlung aussendende Zielmarke wahlweise durch ein steuerbares, IR-Strahlung aussendendes Balkenraster mit verschiedenen Ortsfrequenzen ersetzt werden. Hierdurch wird die Messung der sog. MRTD (= Minimum Resolvable Temperature Difference) ermöglicht. Darunter versteht man das Vermessen der minimal auflösbaren Temperaturdifferenz für die Leistung eines Wärmebildgerätes, was hinsichtlich seiner Reichweite von Bedeutung ist.

## Patentansprüche

1. Vorrichtung zur automatischen Harmonisierung der Sichtlinien zweier miteinander mechanisch und über optische Glieder verbindbarer, in verschiedenen Wellenlängenbereichen arbeitender Beobachtungsgeräte (3, 4) für Tag- und Nachtbetrieb mit einem als Leitstrahl (14) für Flugkörper dienenden Laserstrahl, mit einem Fernrohr (23, 24) und einem Projektor (36) zum Einblenden einer Zielmarke (21) im Taggerät (3), sowie mit einem IR-Detektor (32) im Nachtgerät (4) zum optoelektronischen Umwandeln und Sichtbarmachen der Strahlung, wobei dem Tagsicht-Zielgerät (3) ein Lasersender (1) mit zu den Sichtlinien (15) und (16) der Geräte (3 ; 4) paralleler optischer Achse (14) sowie — in Strahlendurchtrittsrichtung — eine Optik (2), ein Frequenzmodulator (5), eine Projektionsoptik (6) und Drehkeile (11) eingefügt sind, wobei Mittel (12, 27, 19, 33, 19') vorgesehen sind, die nach Durchtritt der Laserstrahlung durch die Drehkeile (11) einen Referenzstrahl (17 ; 17') auskoppeln und bedarfsweise einem der die Frequenzmodulation ausnützenden Detektoren (20 bzw. 20') von Tag- oder Nachtsichtzielgerät (3 bzw. 4) zuführen, und wobei die Drehkeile (11) bedarfsweise über eine den Detektoren (20 bzw. 20'), nachgeschaltete Elektronik (22 ; 22' ; 37) steuerbar sind, je nach dem ob eine zwischen einem Okular (23) und einem Abschlußfenster (28) des Tagkanals angeordnete Tag/Wärmebild-Umschaltung (34) den Antrieb (10) der Drehkeile (11) mit den Signalanschlüssen (A) der dem Tagsicht-Zielgerät (3) zugehörigen Detektorelektronik (22) oder mit Signalanschlüssen (B) der dem Nachtsicht-Zielgerät zugehörigen Detektorelektronik (22') verbinden soll.

2. Vorrichtung nach Anspruch 1, dadurch gekennzeichnet, daß die optische Achse (14) des Lasersenders (1) und Frequenzmodulators (5) gegenüber der optischen Achse (15) des Fernrohres (23, 24) mit Hilfe der Drehkeile (11) eigenständig verstellbar ist.

3. Vorrichtung -nach Anspruch 2, dadurch gekennzeichnet, daß für die eigenständige Verstellbarkeit der optischen Achse (14) eine separate — das Signal D verarbeitende-Elektronik (37 ; Fig. 2) vorgesehen ist.

4. Vorrichtung nach Anspruch 3, dadurch gekennzeichnet, daß die Elektronik (22 ; 22') von Tagsicht-Zielgerät (3) und Nachtsicht-Zielgerät (4) für sich oder gemeinsam mit der die optische Achse (14) verstellenden Elektronik (37) zu einer Auswerteelektronik mit Mikroprozessor zusammengefaßt sind.

5. Vorrichtung nach Anspruch 1, dadurch gekennzeichnet, daß der Referenzstrahl (17) im Bereich zwischen den Drehkeilen (11) und einem Abschlußfenster (13) mit Hilfe eines dichroitischen Spiegels (12) ausgekoppelt und über einen weiteren dichroitischen Spiegel (27) auf den Detektor (20) des Tagsicht-Zielgerätes (3) gelenkt wird (Fig. 1).

6. Vorrichtung nach einem der vorausgehenden Ansprüche, dadurch gekennzeichnet, daß den Detektoren (20 ; 20') von Tag- und Nachtsicht-Zielgerät (3 bzw. 4) jeweils ein Strahlteiler (18 bzw. 18') mit einer den frequenzmodulierten Referenzstrahl (17 bzw. 17') auf den Detektor reflektierenden Spektralteilerschicht (19 bzw. 19') optisch vorgeschaltet ist.

7. Vorrichtung nach Anspruch 6, dadurch gekennzeichnet, daß bei dem Strahlteiler (18) des Tagsicht-Zielgerätes (3) an seiner dem Eingang des Referenzstrahles (17) gegenüberliegenden Außenseite eine Zielmarke (21) befestigt ist, die über einen achsgleich angeordneten Projektor, über die für dessen Strahlung transparente Spektralteilerschicht (19) und über Umlenkspiegel (8 ; 9) in die Sichtlinien des Tagsicht-Zielgerätes eingespiegelt wird (Fig. 1).

8. Vorrichtung nach Anspruch 6, dadurch gekennzeichnet, daß an der dem Detektor (20') gegenüberliegenden Seite des Nachtsicht-Zielgerät-Strahlteilers (18') eine IR-Zielmarke (21') mit zwischen ihr und dem Strahlteiler vorgesehener Kollimatorlinse vorgesehen ist.

9. Vorrichtung nach Anspruch 8, dadurch gekennzeichnet, daß die IR-Zielmarke (21') gegen ein IR-Strahlung aussendendes, in der Intensität regelbares Balkenraster mit verschiedenen Ortsfrequenzen austauschbar ist.

10. Vorrichtung nach einem der vorangehenden Ansprüche, dadurch gekennzeichnet, daß beim Nachtsicht-Zielgerät (4) der mit Hilfe der optischen Glieder (12, 27, 29, 33) zugeführte Referenzstrahl (17') über einen beide Geräte optisch verbindenden Durchlaß (29) sowie über ein an der Innen- oder Außenseite ihres IR-Eintrittsobjektivs (30) befestigtes Strahlteilerprisma (33) oder über zentrische Bohrungen dieses Objektivs auf den Strahlteiler (18') gelangt (Fig. 1).

11. Vorrichtung nach Anspruch 5, 7 und 10, dadurch gekennzeichnet, daß einmal die Umlenkspiegel (8 ; 9) und die dichroitischen Spiegel (12 ; 27) durch je einen Tripelstreifen (12, 27) und zum anderen der dichroitische Umlenkspiegel (12) und das Strahlteilerprisma (33) durch einen vor der Außenseite des IR-Eintrittsobjektivs (30) angeordneten weiteren Tripelstreifen (12, 33) ersetzt sind (Fig. 2).

12. Vorrichtung nach Anspruch 1 und 2, dadurch gekennzeichnet, daß eine den Frequenzmodulator (5) beleuchtende Optik (2) vorgesehen ist, die z. B. als Aufweiteoptik mit variabler Brennweite (Zoom) ausgestattet ist.

13. Vorrichtung nach einem der vorausgehenden Ansprüche, dadurch gekennzeichnet, daß einmal in den zwischen dem Frequenzmodulator (5) und den Drehkeilen (11) gelegenen Strahlengang eine Projektionsoptik (6) und zum anderen in dem zwischen dem Strahlteiler (18) des Tagsicht-Zielgerätes (3) und seinem Fernrohr (23, 24) gelegenen Strahlengang eine der Harmonisierungsfrequenz und der Fadenkreuzeinspiegelung dienende gemeinsame Optik (36) vorgesehen sind.

## Claims

1. Device for automatically harmonising the lines of sight of two observation instruments (3, 4) for day and night operation, adapted to work in different wavelength ranges and to be connected to each other mechanically and via optical means, comprising a laser beam serving as a guide beam (14) for aircraft and with a telescope (23, 24) and a projector (36) for fading in a target mark (21) in the daylight instrument (2) and with an infra-red detector (32) for the night-time instrument (4) for the opto-electronic conversion of and rendering visible the rays, there being incorporated into the daylight-viewing target instrument (3) a laser transmitter (1) with, parallel with the lines of sight (15) and (16) of the instruments (3, 4) an optical axis (14) and — in the direction of passage of the rays — an optical system (2), a frequency modulator (5), a projection lens (6) and rotating wedges (11), means (12, 27, 19, 33, 19') being provided which, once the laser beams have passed through the rotary wedges (11), disengage a reference beam (17, 17') and if necessary feed it to the detectors (20, 20') of daytime or night-time aiming instruments (3, 4) which utilise frequency modulation, the rotary wedges (11) being as required controllable via an electronic unit (22, 22', 37) downstream of the detectors (20, 20'), according to whether a daytime/heat image switch-over means (34) disposed between an occular (23) and an end window (28) of the daytime channel is intended to connect the drive (10) of the rotary wedges (11) to the signal connections (A) of the electronic detector unit (22) associated with the daylight aiming instrument (3) or to signal connections (B) of the electronic detector unit (22') associated with the night-time aiming instrument.

2. Device according to Claim 1, characterised in that the optical axis (14) of the laser transmitter (1) and frequency modulator (5) is by means of the rotary wedges (11) independently adjustable in respect of the optical axis (15) of the telescope (23, 24).

3. Device according to Claim 2, characterised in that for the independent adjustability of the optical axis (14) a separate electronic unit (37) (Fig. 2) is provided which processes the signal D.

4. Device according to Claim 3, characterised in that the electronic unit (22, 22') of daylight aiming instrument (3) and night-time aiming instrument (4) are individually or jointly grouped together with the electronic unit (37) which adjusts the optical axis (14) to form one electronic evaluating unit with a microprocessor.

5. Device according to Claim 1, characterised in that the reference beam (17) is in the region of the rotary wedges (11) and an end window (13) disengaged by means of a dichroitic mirror (12) and is directed via a further dichroitic mirror (27) onto the detector (20) of the daytime aiming instrument (3) (Fig. 1).

6. Device according to one of the preceding Claims, characterised in that the detectors (20, 20') of daytime and night-time aiming instruments (3, 4) are in each case optically preceded by a beam divider (18, 18') with a spectral divider coating (19, 19') reflecting the frequency modulated reference beam (17, 17') onto the detector.

7. Device according to Claim 8, characterised in that in the case of the beam divider (18) of the daylight aiming instrument (3) there is on its outside which is opposite the inlet of the reference beam (17) an aiming mark (21) which is reflected in by an axially identically disposed projector via the spectral divider coating (19) which is transparent to the beams thereof and via deflecting mirrors (8, 9) into the lines of view of the daylight aiming instrument (Fig. 1).

8. Device according to Claim 6, characterised in that on the side of the night-time aiming instrument beam divider (18') which is opposite the detector (20') there is an infra-red aiming mark (21') with a collimating lens provided between it and the beam divider.

9. Device according to Claim 8, characterised in that the infra-red aiming mark (21') can be exchanged for an infra-red ray emitting bar grid regulable in intensity and emitting different spatial frequencies.

10. Device according to one of the preceding Claims, characterised in that in the night-time aiming instrument (4) the reference beam (17') which is supplied by means of the optical members (12, 27, 29, 33) passes through a passage (29) which optically connects the two instruments and through a beam divider prism (33) mounted on the inside or outside of its infra-red inlet objective lens (30) or strikes the beam divider (18') through central bores in this objective lens (Fig. 1).

11. Device according to Claim 5, 7 and 10, characterised in that on the one hand the deflecting mirrors (8, 9) and the dichroitic mirrors (12, 27) are replaced by in each case a triple strip (12, 27) and on the other the dichroitic reversing mirror (12) and the beam divider prism (33) are replaced by a further triple strip (12, 33) disposed in front of the outside of the infra-red inlet objective lens (30) (Fig. 2).

12. Device according to Claim 1 and 2, characterised in that an optical system (2) is provided which illuminates the frequency modulator (5) and which is for example constructed with a variable focal length (zoom) to constitute an opening-out optical system.

13. Device according to one of the preceding Claims, characterised in that on the one hand in the ray path between the frequency modulator (5) and the rotary wedges (11) there is a projection optical system (6) and on the other, in the ray path between the beam divider (18) of the daylight sighting instrument (3) and its telescope (23, 24) there is a common optical system (36) which provides a harmonising frequency and cross-hair imaging.

**Revendications**

1. Dispositif pour aligner de façon automatique les lignes de visée de deux appareils d'observation (3, 4) prévus pour fonctionner de jour et de nuit, pouvant être reliés entre eux mécaniquement et par l'intermédiaire d'éléments optiques et fonctionnant dans des plages différentes de longueurs d'onde, et comportant un faisceau laser utilisé comme rayon directeur (14) pour un engin volant, une lunette (23, 24) et un projecteur (36) servant à introduire un repère de visée (21) dans l'appareil (3) utilisé pour l'observation de jour, ainsi qu'un détecteur infrarouge (32) disposé dans l'appareil (4) utilisé pour l'observation de nuit et servant à convertir par voie opto-électronique et à rendre visible le rayonnement, et dans lequel l'appareil de visée (3) utilisé pour l'observation de jour inclut un émetteur laser (1) possédant un axe optique (24) parallèle aux lignes de visée (15 et 16) des appareils (3 ; 4), ainsi que — dans la direction de traversée du rayonnement — un système optique (2), un modulateur de fréquence (5), un système optique de protection (6) et des prismes tournants (11), et dans lequel il est prévu des moyens (12, 27, 19, 33, 19'), qui, une fois que le rayonnement laser a traversé les prismes tournants (11), délivrent par découplage un faisceau de référence (17 ; 17') et l'envoient éventuellement à l'un des détecteurs (20 ou 20'), utilisant la modulation de fréquence, d'un appareil de visée (3 ou 4) utilisé pour l'observation de jour ou l'observation de nuit, et dans lequel les prismes tournants (11) peuvent être commandés éventuellement par l'intermédiaire d'un système électronique (22 ; 22' ; 37) branché en aval des détecteurs (20 ou 20'), selon qu'un dispositif (34) de commutation image de jour/image produite par rayonnement thermique disposé entre un oculaire (23) et une fenêtre de fermeture (28) du canal d'observation de jour doit relier le dispositif d'entraînement (10) des prismes tournants (11) aux bornes (A) de transmission de signaux du système électronique de détection (22) associé à l'appareil de visée (3) utilisé pour l'observation de jour ou à des bornes (B) de transmission de signaux du système électronique de détection (22') associé à l'appareil de visée utilisé pour l'observation de nuit.

2. Dispositif selon la revendication 1, caractérisé en ce que l'axe optique (14) de l'émetteur laser (1) et du modulateur de fréquence (5) est réglable, de façon indépendante, par rapport à l'axe optique (15) de la lunette (23, 24), à l'aide des prismes tournants (11).

3. Dispositif selon la revendication 2, caractérisé en ce qu'un système électronique séparé (37 ; figure 2), traitant le signal D, est prévu pour permettre le réglage indépendant de l'axe optique (14).

4. Dispositif selon la revendication 3, caractérisé en ce que les systèmes électroniques (22 ; 22') de l'appareil de visée (3) utilisé pour l'observation de jour et de l'appareil de visée (4) utilisé pour l'observation de nuit sont réunis individuellement ou en commun avec le système électronique (37) réglant l'axe optique (14), à un système électronique d'évaluation comportant un microprocesseur.

5. Dispositif selon la revendication 1, caractérisé en ce que le faisceau de référence (17) est extrait à l'aide d'un miroir dichroïque (12) dans la zone comprise entre les prismes tournants (11) et une fenêtre de fermeture (13) et est dirigé par l'intermédiaire d'un autre miroir dichroïque (27) sur le détecteur (20) de l'appareil de visée (3) utilisé pour l'observation de jour (figure 1).

6. Dispositif selon l'une des revendications précédentes, caractérisé en ce que des séparateurs particuliers de faisceau (18 ou 18') comportant des couches propres de division spectrale (19 ou 19'), réfléchissant les faisceaux de référence respectifs (17 ou 17') modulés en fréquence en direction du détecteur, sont branchés optiquement en avant des détecteurs (20 ; 20') des appareils de visée (3 ou 4) utilisés pour l'observation de jour et l'observation de nuit.

7. Dispositif selon la revendication 6, caractérisé en ce que, dans le cas du séparateur de faisceau (18) de l'appareil de visée (3) utilisé pour l'observation de jour, un repère de visée (21) est fixé à la face extérieure de ce séparateur de rayonnement, située à l'opposé de l'entrée du faisceau de référence (17), l'image de ce repère de visée étant reproduite dans les lignes de visée de l'appareil de visée utilisé pour l'observation de jour, en étant transmise par l'intermédiaire d'un projecteur disposé sur le même axe, d'une couche de séparation spectrale (19) transparente pour le rayonnement de ce projecteur et de miroirs de renvoi (8 ; 9) (figure 1).

8. Dispositif selon la revendication 6, caractérisé en ce qu'un repère de visée infrarouge (21') est prévu sur le côté du séparateur de faisceau (18') de l'appareil de visée utilisé pour l'observation de nuit, situé à l'opposé du détecteur (20'), une lentille de collimation étant prévue entre ce repère de visée et le séparateur de faisceau.

9. Dispositif selon la revendication 8, caractérisé en ce que le repère de visée infrarouge (21') peut être remplacé par un réseau à barres émettant un rayonnement, dont l'intensité est réglable et qui comporte des fréquences locales différentes.

10. Dispositif selon l'une des revendications précédentes, caractérisé en ce que dans le cas de l'appareil de visée (4) utilisé pour l'observation de nuit, le faisceau de référence (17') envoyé par l'intermédiaire des éléments optiques (12, 27, 29, 33) parvient au séparateur de faisceau (18') en empruntant un passage (29) reliant optiquement les deux appareils, et en traversant un prisme diviseur de faisceau (33), fixé sur la face intérieure ou sur la face extérieure de l'objectif (30) d'entrée du rayonnement infrarouge, ou des perçages centrés de cet objectif (figure 1).

11. Dispositif selon les revendications 5, 7 et 10, caractérisé en ce que les miroirs de renvoi (8 ; 9) et les miroirs dichroïques (12 ; 27) sont remplacés respectivement par des bandes triples (12, 27) et que d'autre part le miroir dichroïque de renvoi (12) et le prisme diviseur de faisceau (33) sont remplacés par une autre bande triple (12, 33) disposée en avant de la face extérieure de l'objectif (30) d'entrée du rayonnement infrarouge (figure 2).

12. Dispositif selon les revendications 1 et 2, caractérisé en ce qu'il est prévu un système optique (2), qui éclaire un modulateur de fréquence (5) et est équipé, par exemple en tant que système optique d'agrandissement, d'une distance focale variable (zoom).

13. Dispositif selon l'une des revendications précédentes, caractérisé en ce que d'une part un dispositif optique de projection (6) est disposé dans le trajet de rayonnement situé entre le modulateur de fréquence (5) et les prismes tournants (11), et d'autre part un dispositif optique commun (36) utilisant la fréquence d'alignements et l'image réfléchie du réticule, est prévu dans le trajet du rayonnement situé entre le séparateur de faisceau (18) de l'appareil de visée (3) utilisé pour l'observation de jour et la lunette (23, 24) de cet appareil.

Fig. 1

Fig. 2